# EUROPÄISCHE PATENTSCHRIFT

(11) **EP 2 378 255 B1**
(45) Veröffentlichungstag und Bekanntmachung des Hinweises auf die Patenterteilung: **20.09.2017**
(21) Anmeldenummer: 11000532.9
(22) Anmeldetag: 24.01.2011
(51) Int. Cl.: G01F 25/00, G01K 11/24

(54) **Kalibriervorrichtung für Durchflussmessgeräte**
Calibration device for flow meters
Dispositif de calibrage pour débitmètres

(30) Priorität: 06.04.2010 DE 102010014038
(43) Veröffentlichungstag der Anmeldung: 19.10.2011
(73) Patentinhaber: Krohne AG, 4019 Basel (CH)
(72) Erfinder: Leendert van Brakel, Pieter, Cornelis, 3271 BK Mijnsheerenland (NL); Van Bekkum, Art Jan, 4223 MG, Hoornaar (NL)
(74) Vertreter: Gesthuysen Patent- und Rechtsanwälte

(56) Entgegenhaltungen:
- EP-A1- 2 072 972
- DE-A1-102005 038 599
- US-A- 5 455 781
- US-A- 5 705 753

## Beschreibung

Die Erfindung betrifft eine Kalibriervorrichtung für Durchflussmessgeräte mit wenigstens einer Prüflingsmessstrecke, in die der zu kalibrierende Durchflussmessgeräteprüfling einsetzbar ist, mit wenigstens einer Vorrichtung zur Erzeugung eines Durchflusses eines Mediums durch die Prüflingsmessstrecke, und mit wenigstens einer Temperaturmessvorrichtung in der Prüflingsmessstrecke zur Erfassung der Mediumtemperatur, Die Erfindung betrifft ferner ein Verfahren zur Kalibrierung eines Durchflussmessgeräts mit einer derartigen Kalibriervorrichtung.

Kalibriervorrichtungen der vorgenannten Art sind seit langem aus dem Stand der Technik bekannt (siehe beispielsweise die US 5,455,781). Die Kalibrierung dient hier dazu, die Abweichung der Messergebnisse des zu testenden Durchflussmessgeräteprüflings von einem in der Kalibriervorrichtung vorgesehenen Normal zu erfassen, um den Durchflussmessgeräteprüfling anhand der Abweichungen einzumessen. Solche Kalibriervorrichtungen finden auch Anwendung bei der Eichung von Durchflussmessgeräten, wobei hier die Konformität mit bestimmten Genauigkeitsanforderungen von dazu befugten Instituten bestätigt wird, wie zum Beispiel von der physikalisch-technischen Bundesanstalt in Deutschland. Das Erfordernis der - auch wiederholten - Kalibrierung/Eichung eines Durchflussmessgeräts ergibt sich zum Teil allein aus dem Einsatzgebiet des Durchflussmessgeräts, so handelt es sich beispielsweise bei dem Transport von Öl um eichpflichtigen Verkehr, bei dem nur geeichte Durchflussmessgeräte eingesetzt werden dürfen.

Abgesehen davon, dass eine hohe Messgenauigkeit aus technischer Sicht immer wünschenswert ist, besteht gerade bei hochwertigen flüssigen oder gasförmigen Gütern, wie zum Beispiel Erdöl und Erdgas, ein erhebliches Interesse daran, dass - aus Lieferantensicht - die und nur die zu liefernde Menge geliefert wird, und aus Abnehmersicht, dass die - und zwar mindestens die - angeforderte Menge erhalten wird. Messtoleranzen gehen immer zu Lasten eines der am Handel beteiligten, üblicherweise zu Lasten des Lieferanten.

Das Normal, mit dem der Messwert des Durchflussmessgeräteprüflings verglichen wird, kann vorliegen in Form eines Normalmessgeräts, das ebenfalls in die Prüflingsmessstrecke eingebracht ist und so dem gleichen Durchfluss unterworfen ist, wie der in der Prüflingsmessstrecke davon beabstandet angeordnete, zu kalibrierende Durchflussmessgeräteprüfling. Dies gilt, insbesondere bei gasförmigen Medien, insoweit andere den Massen- oder Volumendurchfluss beeinflussende Größen innerhalb des Mediums stationär sind, jedenfalls so lange stationär sind, dass das Normalmessgerät und der Durchflussmessgerätprüfling ihre Messung unter gleichen Randbedingungen durchführen. Üblicherweise verfügen Kalibriervorrichtungen auch über Druckmessvorrichtungen, da - insbesondere bei gasförmigen Medien - der Druck wesentlichen Einfluss auf die Dichte des Mediums hat und daher beispielsweise für solche Durchflussmessgeräte eine wichtige Größe darstellt, die auf der Messung der Durchflussgeschwindigkeit des Mediums beruhen, wie zum Beispiel Ultraschalldurchflussmessgeräte, im Gegensatz zu solchen Messgeräten, die aufgrund ihres Messprinzips direkt einen Rückschluss auf den Massedurchfluss erlauben, wie dies zum Beispiel bei Coriolis-Massedurchflussmessgeräten der Fall ist.

Häufig wird ein Normal auch als ein volumetrisches Normal realisiert, bei dem ein geometrisch vermessenes Referenzvolumen, beispielsweise in Form eines Kolbensystems, in einer bestimmten Zeit in das Volumen der Prüflingsmessstrecke gedrückt wird, so dass der Durchfluss durch die Prüflingsmessstrecke hochgenau vorgebbar ist.

Die eingangs genannte Temperaturmessvorrichtung in der Kalibriervorrichtung ist aus verschiedenen Gründen notwendig bzw. vorteilhaft für eine genaue Kalibrierung. Zum einen ist die genaue Erfassung der Mediumtemperatur interessant, um die Kalibrierung des Durchflussmessgerätprüflings bei verschiedenen Betriebstemperaturen vorzunehmen. Zum anderen hat die Mediumtemperatur jedoch auch erheblichen Einfluss auf die Kalibriervorrichtung selbst. Von der Mediumtemperatur hängen beispielsweise geometrische Abmessungen des Rohrleitungssystems der Kalibriervorrichtung ab, insbesondere die durch thermische Einflüsse verursachten Längenausdehnungen bzw. -kontraktionen.

Aus dem Stand der Technik ist bekannt, die Mediumtemperatur hochgenau durch invasive Temperaturmesssonden zu erfassen, also solche Temperatursensoren, die in das durchströmte Volumen der Prüflingsmessstrecke hineinragen. Üblicherweise werden Temperaturmesssonden eingesetzt, die auf einer elektrischen Widerstandsänderung beruhen, beispielsweise Platin-Temperatursensoren, die in der Spitze eines in den Mediumstrom hineinragenden Messrohres angeordnet sind. Die Temperaturmessung erfolgt dabei zwar hochgenau, bringt jedoch den Nachteil mit sich, dass die Strömung an dem Messort und stromabwärts vom Messort erheblich gestört wird, so dass die Strömung in der Kalibriervorrichtung insgesamt nicht so gleichmäßig herstellbar ist, wie dies für eine hochgenaue Messung erforderlich ist. Ein weiterer Nachteil besteht darin, dass eine invasive Temperaturmessvorrichtung nur eine punktuelle Temperaturinformation liefert, wodurch sich über das Strömungsprofil verändernde Temperaturen, also Temperaturverläufe, nicht erkennen lassen. Dies lässt sich zwar dadurch umgehen, dass mehrere Temperatursensoren die Temperatur an verschiedenen Stellen des Strömungsprofils bzw. in einem Strömungsquerschnitt erfassen, jedoch vervielfachen sich dadurch die in der zu vermessenden Strömung induzierten Störungen, was sehr nachteilig ist. Nichtinvasive Temperaturmessungen mittels der Ultraschallmesstechnik beschreiben beispielsweise die US 5,705,753 oder die EP 2 072 972 A1. Einen Messaufbau, in dem sowohl ein Reflektor für Ultraschallsignale als auch ein Referenztemperaturmesssensor, der beispielhaft als NTC-Element ausgestaltet ist, invasiv im Strömungsrohr angeordnet sind, beschreibt die DE 10 2005 038 599 A1.

Es ist daher Aufgabe der vorliegenden Erfindung, eine Kalibriervorrichtung für Durchflussmessgeräte anzugeben, mit der die Nachteile von aus dem Stand der Technik bekannten Kalibriervorrichtungen - zumindest teilweise - vermieden werden, mit der insbesondere eine möglichst störungsfreie und trotzdem hochgenaue Erfassung der Temperatur des strömenden Mediums möglich ist.

Die aufgezeigte Aufgabe ist erfingdungsgemäß zunächst und im Wesentlichen bei der in Rede stehenden Kalibriervorrichtung dadurch gelöst, dass die Temperaturmessvorrichtung als Ultraschalltemperaturmessvorrichtung ausgestaltet ist, die Mediumtemperatur folglich durch die Geschwindigkeit eines emittierten Ultraschallsignals im Medium bestimmt wird, wobei die Ultraschalltemperaturmessvorrichtung nicht in den Strömungsquerschnitt der Prüflingsmessstrecke hineinreicht, so dass die Strömung in der Prüflingsmessstrecke im Wesentlichen unbeeinflusst durch die Ultraschalltemperaturmessvorrichtung ist.

Bei der Ultraschalltemperaturmessung wird der aus der Physik an sich bekannte Umstand genutzt, dass die Schallgeschwindigkeit innerhalb eines Mediums von der Temperatur des Mediums abhängt, so dass sich bei bekannter Pfadlänge des Ultraschallsignals vom Sender zum Empfänger über die Messung der Laufzeit auf die Wärme des Mediums schließen lässt.

Durch den Einsatz von einer Ultraschalltemperaturmessvorrichtung zur Erfassung der Mediumtemperatur in der Prüflingsmessstrecke wird zunächst der Vorteil erzielt, dass die Strömung an sich weitestgehend unbeeinflusst bleibt, da - im Gegensatz zur Temperaturmessung mit invasiven Temperäturmessvorrichtungen - die Strömung in der Prüflingsmessstrecke nicht gestört wird. Ein weiterer Vorteil der Verwendung einer Ultraschalltemperaturmessvorrichtung besteht darin, dass sie eine sich ändernde Mediumtemperatur praktisch verzögerungsfrei erfasst, wobei die Messzeit lediglich der Zeit entspricht, die das Ultraschallsignal braucht, um den Signalpfad in der Prüflingsmessstrecke zu durchlaufen, wobei ein solcher Signalpfad typischerweise senkrecht zur Strömungsrichtung verläuft. Die Ultraschalltemperaturmessvorrichtung gestattet daher auch die Erfassung von schnellen Temperaturänderungen des Mediums. Ein weiterer Vorteil der Verwendung von Ultraschalltemperaturmessvorrichtungen besteht darin, dass durch sie nicht lediglich eine punktuelle Temperatur innerhalb des strömenden Mediums erfasst wird, sondern praktisch ein gemittelter Temperaturwert über den Pfad des Ultraschallsignals in der Prüflingsmessstrecke, da sich das Ultraschallsignal in unterschiedlich temperierten Bereichen stets mit einer der Mediumtemperatur entsprechenden Geschwindigkeit in dem Medium fortpflanzt und die als eigentliche Messgröße dienende Laufzeit des Ultraschallsignals damit automatisch die mittlere Temperatur entlang dem Signalpfad des Ultraschallsignals wiedergibt.

Die Ultraschalltemperaturmessvorrichtung wird bevorzugt dort in der Prüflingsmessstrecke vorgesehen, wo der zu kalibrierende Durchflussmessgeräteprüfling eingesetzt wird, vorzugsweise am einlaufseitigen Ende des Durchflussmessgeräteprüflings, wobei es auch vorteilhaft sein kann, eine weitere Ultraschalltemperaturmessvorrichtung am auslaufseitigen Ende des Durchflussmessgeräteprüflings in der Prüflingsmessstrecke vorzusehen, da so auch Temperaturänderungen in unmittelbarer Nähe des Durchflussmessgeräteprüflings erkennbar und berücksichtigbar sind.

Erfindungsgemäß ist weiterhin vorgesehen, dass eine invasive Referenz-Temperaturmessvorrichtung und eine zugehörige Referenz-Ultraschalltemperaturmessvorrichtung benachbart zueinander in der Kalibriervorrichtung angeordnet sind, und zwar so in der Kalibriervorrichtung angeordnet sind, dass die Strömung in der Prüflingsmessstrecke im Bereich der Ultraschalltemperaturmessvorrichtung und im Bereich des Durchflussmessgeräteprüflings im Wesentlichen unbeeinflusst von der invasiven Referenz-Temperaturmessvorrichtung ist, so dass mit der Referenz-Ultraschalltemperaturmessvorrichtung die Ultraschallgeschwindigkeit im Medium bei der durch die invasive Referenz-Temperaturmessvorrichtung ermittelten Mediumtemperatur bestimmbar ist.

Die erfindungsgemäße Kalibriervorrichtung bringt wesentliche Vorteile mit sich. Durch die zueinander benachbarte Anordnung der invasiven Referenz-Temperaturmessvorrichtung und der zugehörigen Referenz-Ultraschalltemperaturmessvorrichtung ist es möglich, einen zuverlässigen Zusammenhang zwischen der Ultraschallgeschwindigkeit und der Temperatur desjenigen Mediums zu erfassen, das gerade in der Kalibriervorrichtung zum Einsatz kommt. Dadurch ist es nicht erforderlich, auf mathematischphysikalische Zusammenhänge zurückgreifen zu müssen, die die Temperaturabhängigkeit der Ultraschallgeschwindigkeit in dem Medium beschreiben, zumal derartige Zusammenhänge für ein bestimmtes Medium unter Umständen überhaupt nicht bekannt sind oder jedenfalls nicht hinreichend genau bekannt sind. Auch besteht dann nicht mehr die Notwendigkeit, eine genaue Kenntnis von demjenigen Medium zu haben, mit dem die Messung gerade durchgeführt wird, da in der Kalibriervorrichtung selbst messtechnisch der Zusammenhang von Schallgeschwindigkeit und Mediumtemperatur ermittelt wird.

Wenn davon die Rede ist, dass die invasive Referenz-Temperaturmessvorrichtung und die zugehörige Referenz-Ultraschalltemperaturmessvorrichtung benachbart zueinander angeordnet sind, so ist damit gemeint, dass sie so nah wie möglich zueinander angeordnet sind, so dass die von ihnen gelieferten Messergebnisse praktisch immer auf ein und denselben Abschnitt des strömenden Mediums bezogen sind. Dadurch wird die Wahrscheinlichkeit verringert, dass bei einer zeitlichen Veränderung der Temperatur des Mediums, die eine der Referenz-Messvorrichtungen diese Veränderung bereits erfasst hat, während die andere der beiden Referenz-Messvorrichtungen diese Veränderung innerhalb des Mediums noch nicht hat bemerken können. Bevorzugt wird die invasive Referenz-Temperaturmessvorrichtung stromabwärts von der zugehörigen Referenz-Ultraschalltemperaturmessvorrichtung angeordnet, so dass die von der invasiven Referenz-Temperaturmessvorrichtung in der Strömung induzierten Störungen sich nicht auf die Referenz-Ultraschalltemperaturmessvorrichtung auswirken.

Wenn weiter davon die Rede ist, dass die Strömung in der Prüflingsmessstrecke im Bereich der Ultraschalltemperaturmessvorrichtung und im Bereich des Durchflussmessgeräteprüflings im Wesentlichen unbeeinflusst von der invasiven Referenz-Temperaturmessvorrichtung ist, dann ist damit gemeint, dass sich die durch die invasive Referenz-Temperaturmessvorrichtung induzierten Störungen in der Strömung am Ort der Ultraschalltemperaturmessvorrichtung und am Ort des zu kalibrierenden Durchflussmessgeräteprüflings praktisch abgebaut haben, also beispielsweise sich die turbulente kinetische Energie der Strömung kurz nach der invasiven Referenz-Temperaturmessvorrichtung um wenigstens 90 % abgebaut hat am Ort der Ultraschalltemperaturmessvorrichtung und am Ort des Durchflussmessgeräteprüflings.

Der größte Nutzen aus der Ausstattung der erfindungsgemäßen Kalibriervorrichtung mit einer invasiven Referenz-Temperaturmessvorrichtung und einer zugehörigen Referenz-Ultraschalltemperaturmessvorrichtung wird dann erzielt, wenn der aus der Referenzmessung gewonnene Zusammenhang zwischen der Ultraschallgeschwindigkeit v_{ref} im Medium und der Mediumtemperatur T_{ref} Basis für die Temperaturmessung mit der Ultraschalltemperaturmessvorrichtung in der Prüflingsmessstrecke ist, denn in diesem Fall ist die Ultraschalltemperaturmessvorrichtung, die bevorzugt in der Nähe des Durchflussmessgeräteprüflings vorgesehen ist, bestmöglich abgeglichen auf die spezielle Temperaturabhängigkeit der Schallgeschwindigkeit in dem aktuell verwendeten Medium innerhalb der Kalibriervorrichtung.

Es gibt verschiedene Möglichkeiten, die Referenz-Messvorrichtungen so in der Kalibriervorrichtung anzuordnen, dass die Ultraschallmessvorrichtung und der Durchflussmessgeräteprüfling möglichst ungestört bleiben. Nach einer bevorzugten Ausgestaltung der Erfindung ist vorgesehen, dass die invasive Referenz-Temperaturmessvorrichtung und die zugehörige Referenz-Ultraschalltemperaturmessvorrichtung in der Prüflingsmessstrecke selbst angeordnet sind. Eine Beeinflussung kann dann beispielsweise dadurch vermieden werden, dass die invasive Referenz-Temperaturmessvorrichtung und die zugehörige Referenz-Ultraschalltemperaturmessvorrichtung stromabwärts von der Ultraschalltemperaturmessvorrichtung und dem Durchflussmessgeräteprüfling angeordnet werden. Eine Beeinflussung lässt sich jedoch auch bei einer Anordnung der Referenz-Messvorrichtungen stromaufwärts von der Ultraschalltemperaturmessvorrichtung und dem Durchflussmessgeräteprüfling erreichen, indem der Abstand nur groß genug gewählt wird.

Gemäß einer alternativen vorteilhaften Ausgestaltung der Erfindung ist vorgesehen, dass in der Kalibriervorrichtung ein Bypass zur Prüflingsmessstrecke realisiert ist, und in dem Bypass die invasive Referenz-Temperaturmessvorrichtung und die zugehörige Referenz-Ultraschalltemperaturmessvorrichtung angeordnet sind. Durch den Bypass zur Prüflingsmessstrecke ist es grundsätzlich möglich, von der Prüflingsmessstrecke strömendes Medium abzuzweigen und durch die invasive Referenz-Temperaturmessvorrichtung und die zugehörige Referenz-Ultraschalltemperaturmessvorrichtung zu untersuchen, so dass die Referenzmessung und die Messung in der Strömung der Prüflingsmessstrecke, in die der zu kalibrierende Durchflussmessgeräteprüfling eingebaut ist, örtlich entkoppelt sind, wodurch konstruktiv eine gegenseitige Beeinflussung von Referenzmessung und Messung in der Prüflingsmessstrecke unterbunden wird.

Als besonders vorteilhaft hat sich herausgestellt, wenn der Bypass mittels Absperrorganen von der Prüflingsmessstrecke strömungstechnisch entkoppelbar ist, d. h. der Bypass zur Prüflingsmessstrecke hin geöffnet und verschlossen werden kann, so dass beispielsweise auch bei geschlossenem Bypass eine Referenzmessung erfolgen kann bei größtmöglicher strömungsmäßiger Entkopplung von der Prüflingsmessstrecke.

Gemäß einer besonders bevorzugten Ausgestaltung der Erfindung ist vorgesehen, dass der Bypass einen Bypasskreislauf bildet, wobei im Bypasskreislauf insbesondere eine Fördervorrichtung und/oder eine Heizvorrichtung und/oder eine Kühlvorrichtung für das Medium vorgesehen sind. Damit eröffnet sich eine Vielzahl von Möglichkeiten, Referenzmessungen unabhängig von dem Geschehen in der Prüflingsmessstrecke durchzuführen, weil sich die Strömung im Bypasskreislauf und in der Prüflingsmessstrecke unabhängig voneinander beeinflussen lassen. Mit der Fördervorrichtung, die üblicherweise als Pumpe ausgestaltet ist, kann das Medium im Bypasskreislauf umgewälzt werden, so dass insbesondere dafür gesorgt werden kann, dass innerhalb des Bypasskreislaufes sich ein homogener Mediumzustand einstellt, insbesondere eine konstante Temperatur. Die Temperatur des Mediums kann durch die Fördervorrichtung selbst beeinflusst werden, aber auch gezielt durch den Einsatz der vorgenannten Heiz- oder Kühlvorrichtung. So lässt sich parallel zu der Prüflingsmesstrecke ohne Weiteres eine Vielzahl von Referenzmessungen durchführen, so dass der Zusammenhang v_{ref} = f(T_{ref}) zwischen der Ultraschallgeschwindigkeit v_{ref} im Medium und der Mediumtemperatur T_{ref} sehr genau und einfach bestimmbar ist und dies parallel oder zeitlich vor den Messungen am Durchflussmessgeräteprüfling.

Die eingangs hergeleitete Aufgabe wird ferner durch ein Verfahren zur Kalibrierung eines Durchflussmessgeräts mit einer der zuvor beschriebenen Kalibriervorrichtungen gelöst, wobei die Kalibriervorrichtung wenigstens eine Prüflingsmessstrecke, in die der zu kalibrierende Durchflussmessgeräteprüfling einsetzbar ist, wenigstens eine Vorrichtung zur Erzeugung eines Durchflusses eines Mediums durch die Prüflingsmessstrecke und wenigstens eine Temperaturmessvorrichtung in der Prüflingsmessstrecke zur Erfassung der Mediumtemperatur aufweist. Dabei ist die Temperaturmessvorrichtung ferner als Ultraschalltemperaturmessvorrichtung ausgestaltet, und es ist eine invasive Referenz-Temperaturmessvorrichtung und eine zugehörige Referenz-Ultraschalltemperaturmessvorrichtung vorgesehen, die benachbart zueinander in der Kalibriervorrichtung angeordnet sind und so in der Kalibriervorrichtung angeordnet sind, dass die Strömung in der Prüflingsmessstrecke im Bereich der Ultraschalltemperaturmessvorrichtung und im Bereich des Durchflussmessgeräteprüflings im Wesentlichen unbeeinflusst von der invasiven Referenz-Temperaturmessvorrichtung ist, so dass mit der Referenz-Ultraschalltemperaturmessvorrichtung die Ultraschallgeschwindigkeit v_{ref} im Medium bei der durch die invasive Referenz-Temperaturmessvorrichtung ermittelten Mediumtemperatur T_{ref} bestimmbar ist. Gemäß dem erfindungsgemäßen Verfahren ist vorgesehen, dass in der Kalibriervorrichtung eine Messung der Ultraschallgeschwindigkeit mittels der Referenz-Ultraschalltemperaturmessvorrichtung und eine Messung der Mediumtemperatur mittels der invasiven Referenz-Temperaturmessvorrichtung durchgeführt wird, und der aus diesen Messungen gewonnene Zusammenhang v_{ref} = f(T_{ref}) zwischen der Ultraschallgeschwindigkeit v_{ref} im Medium und der Mediumtemperatur T_{ref} als Basis für die Temperaturmessung mit der Ultraschalltemperaturmessvorrichtung in der Prüflingsmessstrecke verwendet wird. Wie bereits anhand der erfindungsgemäßen Kalibriervorrichtung erläutert, besteht der Vorteil dieser Vorgehensweise darin, dass eine hochgenaue Referenzmessung in der Kalibriervorrichtung durchgeführt werden kann mit dem Medium, das auch für die Kalibrierung des Durchflussmessgeräteprüflings verwendet wird, während eine schnelle, über den Signalpfad des Ultraschallsignals mittelnde Temperaturmessung in der Prüflingsmessstrecke - auch in unmittelbarer Nähe des Durchflussmessgeräteprüflings - durchgeführt werden kann, wobei eine maximale Genauigkeit der Ultraschalltemperaturmessvorrichtung durch die Verwendung des über die Referenzmessung gefundenen Zusammenhangs v_{ref} = f(T_{ref}) gegeben ist.

Bei einer solchen Kalibriervorrichtung, bei der ein Bypass zur Prüflingsmessstrecke realisiert ist und in dem Bypass die invasive Referenz-Temperaturmessvorrichtung und die zugehörige Referenz-Ultraschalltemperaturmessvorrichtung angeordnet sind, bei der ferner der Bypass mittels Absperrorganen von der Prüflingsmessstrecke strömungstechnisch entkoppelbar ist, besteht eine bevorzugte Weiterentwicklung des vorgenannten Verfahrens darin, dass im Bypass der Zusammenhang zwischen der Ultraschallgeschwindigkeit v_{ref} im Medium und der Mediumtemperatur T_{ref} gewonnen wird, nachdem der Bypass mit dem in der Prüflingsmessstrecke vorhandenen Medium geflutet worden ist und dann der Bypass mittels der Absperrorgane von der Prüflingsmessstrecke strömungstechnisch abgekoppelt worden ist. Durch diese Vorgehensweise kann in dem Bypass die Temperaturabhängigkeit der Ultraschallgeschwindigkeit sehr genau erfasst werden, und zwar ohne Gefahr zu laufen, dass die Referenzmessungen den eigentlichen Kalibrierungsvorgang beeinflussen. Da die Temperaturmessung mittels der invasiven Referenz-Temperaturmessvorrichtung zwar hochgenau aber vergleichsweise träge ist, sieht eine bevorzugte Ausgestaltung des vorgeschilderten Verfahrens vor, dass im Bypass zunächst ein stationärer Temperaturzustand des ruhenden oder auch strömenden Mediums abgewartet wird, insbesondere ein stationärer Zustand hinsichtlich der mit der Referenz-Temperaturmessvorrichtung ermittelten Mediumteniperatur, bevor der Zusammenhang v_{ref} = f(T_{ref}) zwischen der Ultraschallgeschwindigkeit v_{ref} im Medium und der Mediumtemperatur T_{ref} festgelegt und zur Verwendung für die Ultraschalltemperaturmessvorrichtung in der Prüflingsmessstrecke freigegeben wird. Ein solcher stationärer Zustand des Mediums kann dadurch detektiert werden, dass aufeinander folgende Referenzmessungen eine vorgegebene maximale Veränderungsschwelle unterschreiten müssen, damit die Referenzmessungen als solche akzeptiert werden und in den aufgefundenen Zusammenhang zwischen der Ultraschallgeschwindigkeit im Medium und der Mediumtemperatur eingehen.

Von besonderem Vorteil ist es, wenn - wie zuvor angedeutet - der Zusammenhang zwischen der Mediumtemperatur und der Schallgeschwindigkeit innerhalb des Mediums in Form einer Kennlinie vorliegt, wobei weitere Einflussgrößen, wie zum Beispiel der Druck, hier Berücksichtigung finden können. Insofern ist bei einer bevorzugten Ausgestaltung des Verfahrens vorgesehen, dass im Bypass nacheinander eine Mehrzahl von Temperaturen eingestellt wird, insbesondere unter Verwendung einer im Bypass oder im Bypasskreislauf vorgesehenen Fördervorrichtung und/oder einer Heizvorrichtung und/oder einer Kühlvorrichtung für das Medium, und eine Mehrzahl von Zusammenhängen v_{ref} = f(T_{ref}) zwischen der Ultraschallgeschwindigkeit v_{ref} im Medium und der Mediumtemperatur T_{ref} gewonnen wird, insbesondere auch der Mediumdruck gemessen und für jeden erfassten Zusammenhang vermerkt wird.

Im Einzelnen gibt es nun eine Vielzahl von Möglichkeiten, die erfindungsgemäße Kalibriervorrichtung und das erfindungsgemäße Verfahren zur Kalibrierung eines Durchflussmessgeräts auszugestalten und weiterzubilden. Dazu wird verwiesen einerseits auf die dem Patentanspruch 1 und dem Patentanspruch 11 nachgeordneten Patentansprüche, andererseits auf die folgende Beschreibung in Verbindung mit der Zeichnung. In der Zeichnung zeigen
- Fig. 1: die schematische Darstellung einer aus dem Stand der Technik bekannten Kalibriervorrichtung,
- Fig. 2: schematisch eine Kalibriervorrichtung mit einer Ultraschalltemperaturmessvorrichtung,
- Fig. 3a, 3b: schematisch eine erfindungsgemäße Kalibriervorrichtung mit Referenz-Messvorrichtungen in der Prüflingsmessstrecke,
- Fig. 4: schematisch eine erfindungsgemäße Kalibriervorrichtung mit Referenz-Messvorrichtungen in einem Bypass zur Prürlingsmessstrecke,
- Fig. 5: eine weitere schematische Darstellung einer erfindungsgemäßen Kalibriervorrichtung und
- Fig. 6: schematisch den Ausschnitt einer weiteren erfindungsgemäßen Kalibriervorrichtung mit Augenmerk auf die besondere Ausgestaltung der Ultraschalltemperaturmessvorrichtung.

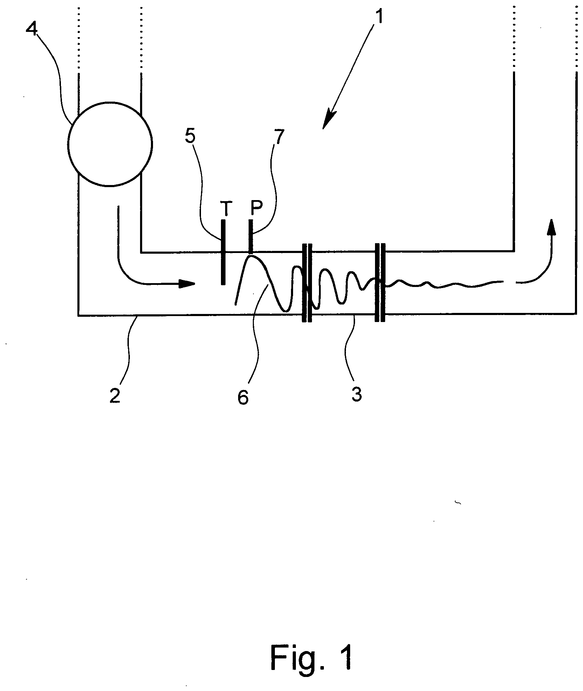

In Fig. 1 ist eine aus dem Stand der Technik bekannte Kalibriervorrichtung 1 ausschnittweise und schematisch dargestellt, die eine Prüflingsmessstrecke 2 aufweist, in die ein zu kalibrierender Durchflussmessgeräteprüfling 3 einsetzbar ist und vorliegend auch eingesetzt ist. Die Kalibriervorrichtung 1 weist zudem eine Vorrichtung 4 zur Erzeugung eines Durchflusses eines Mediums durch die Prüflingsmessstrecke 2 auf, wobei es sich bei dieser Vorrichtung hier um eine Pumpe handelt, Ferner weist die Kalibriervorrichtung 1 eine Temperaturmessvorrichtung 5 in der Prüflingsmessstrecke 2 in unmittelbarer Nähe zum Durchflussmessgeräteprüfling 3 auf, die der Erfassung der Mediumtemperatur dient. Bei der Temperaturmessvorrichtung 5 handelt es sich in Fig. 1 um einen invasiven Temperaturmesssensor, der in das Volumen der Prüflingsmessstrecke 2 hineinragt und hier als gekapseltes PT100 Wiederstandselement ausgeführt ist. Die Temperaturmessung mit einem solchen invasiven Temperaturaufnehmer ist zwar hochgenau, weist jedoch die Nachteile auf, dass die Messung nur punktförmig in einem geringen Ausschnitt des Strömungsquerschnittes erfolgt und ferner die Strömung durch den in das Volumen der Prüflingsmessstrecke 2 hineinragenden Sensor gestört wird, so dass Störungen 6 in der stromaufwärts von der Temperaturmessvorrichtung 5 praktisch störungsfreien Strömung induziert werden.

Die Kalibriervorrichtung 1 weist hier ferner auch einen Drucksensor 7 auf, der am Umfang in der Rohrwandung der Prüflingsmessstrecke 2 vorgesehen ist, aber nicht in das Volumen der Prüflingsmessstrecke 2 hineinragt. Der Druck ist insbesondere bei gasförmigen Medien eine unverzichtbare Größe zur Ermittlung des Massedurchflusses und zur Bestimmung von druckabhängigen Parametern des Mediums.

Die Temperaturmessvorrichtung 5 ist ganz in der Nähe des Durchflussmessgeräteprüflings 3 vorgesehen, so dass ein genauer Eindruck von den Temperaturverhältnissen des Mediums in unmittelbarer Nähe des Durchflussmessgeräteprüflings 3 gewonnen werden kann.

Kalibriervorrichtungen 1 weisen üblicherweise auch noch ein Normalmessgerät auf, wobei die Ergebnisse des Durchflussmessgerätprüflings 3 mit den Messergebnissen des Normalmessgeräts verglichen werden. Bei anderen bekannten Kalibriervorrichtungen wird ein volumetrisches Normal verwendet, beispielsweise in Form eines Kolbensystems, wodurch ein definierter Durchfluss vorgebbar ist, in dem der Kolben des volumetrischen Normals in einer bestimmten Zeit ein bestimmtes Mediumvolumen verdrängt und durch die Prüflingsmessstrecke presst. Dies ist hier im Einzelnen nicht dargestellt, weil es auf diese Details zur Erläuterung der wesentlichen Punkte der erfindungsgemäßen Kalibriervorrichtung nicht ankommt.

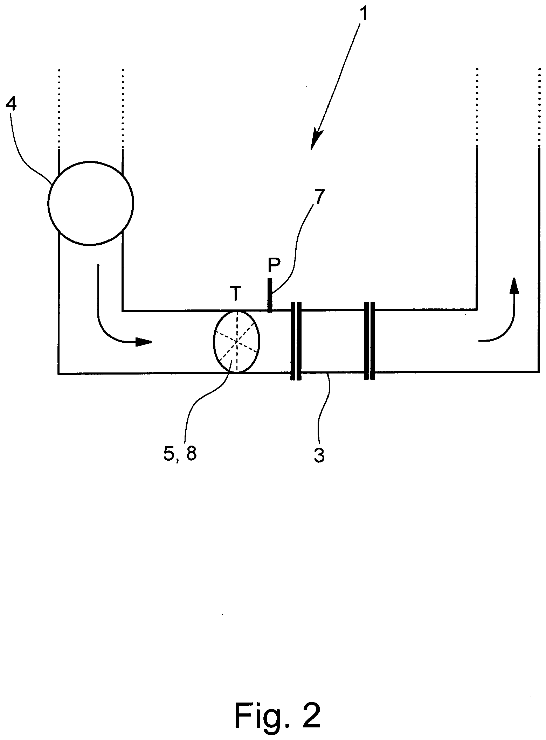

In Fig. 2 ist eine Kalibriervorrichtung 1 dargestellt, die sich von der aus dem Stand der Technik bekannten Kalibriervorrichtung gemäß Fig. 1 darin unterscheidet, dass die Temperaturmessvorrichtung 5 als Ultraschalltemperaturmessvorrichtung 8 ausgestaltet ist, so dass die Mediumtemperatur folglich durch die Geschwindigkeit eines emittierten Ultraschallsignals im Medium bestimmt wird. Die von der Ultraschalltemperaturmessvorrichtung 8 emittierten Ultraschallsignale bewegen sich im Medium praktisch störungsfrei fort. Wichtig ist, dass die Ultraschalltemperaturmessvorrichtung 8 nicht in den Strömungsquerschnitt der Prüflingsmessstrecke 2 hineinreicht, so dass die Strömung in der Prüflingsmessstrecke 2 im Wesentlichen unbeeinflusst durch die Ultraschalltemperaturmessvorrichtung 8 ist. Der Vorteil einer -hier auch in unmittelbarer Nähe des Durchflussmessgeräteprüflings 3 zum Einsatz kommenden - Ultraschalltemperaturmessvorrichtung 8 besteht darin, dass die Information über die Ultraschallgeschwindigkeit und damit über die Temperatur in dem vermessenen Querschnitt praktisch verzögerungsfrei vorliegt, da im Unterschied zu invasiven Temperaturmessvorrichtungen nicht erst ein Sensor und dessen Hülle von dem Medium aufgeheizt werden müssen, sondern das Medium praktisch selbst über die Ausbreitungsgeschwindigkeit des Schalls vermessen wird. Ferner wird immer nur die Laufzeit des Ultraschallsignals über den Signalpfad gemessen und damit automatisch auch der gemittelte Temperaturverlauf entlang dieses Signalpfades, so dass die Ultraschalltemperaturmessvorrichtung 8 nicht nur einen punktuellen Temperatureindruck, sondern vielmehr eine gemittelte Gesamttemperatur über den Signalpfad liefert. Die Signalpfade der hier realisierten und dargestellten Ultraschalltemperaturmessvorrichtungen 8 verlaufen praktisch senkrecht zur Strömung des Mediums innerhalb der Kalibriervorrichtung 1.

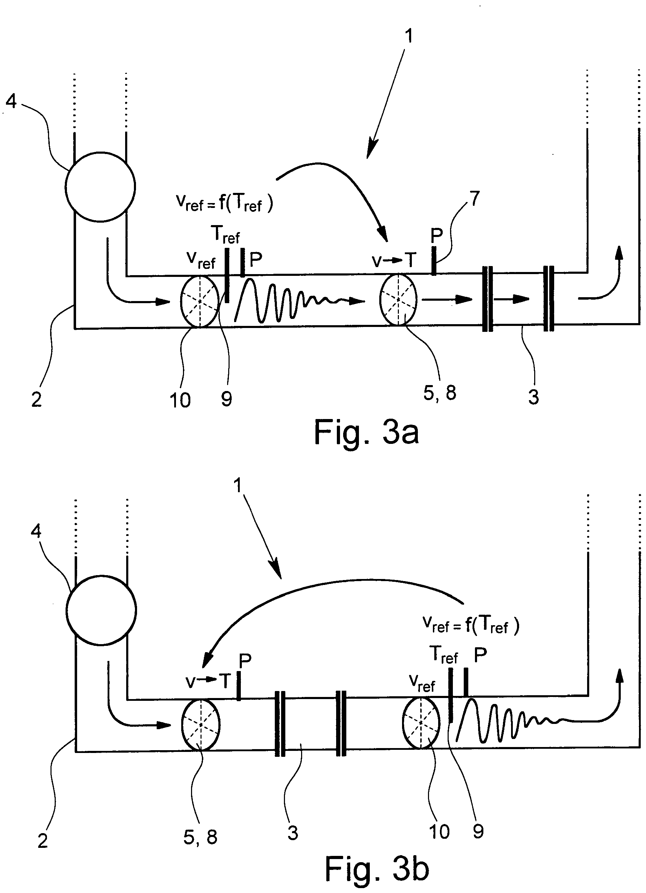

Bei der Verwendung von Ultraschalltemperaturmessvorrichtungen 8 zur Erfassung der Mediumtemperatur kann sich als problematisch herausstellen, dass der Zusammenhang zwischen der Mediumtemperatur einerseits und der Ultraschallgeschwindigkeit im Medium andererseits sehr stark abhängig ist von dem verwendeten Medium. Dieser Zusammenhang muss folglich bekannt sein, um aus der gemessenen Laufzeit eines Ultraschallsignals auf die Geschwindigkeit und damit auf die Temperatur im Medium schließen zu können. Bei den erfindungsgemäßen Kalibriervorrichtungen 1 gemäß den Fig. 3 bis 5 ist deshalb vorgesehen, dass eine invasive Referenz-Temperaturmessvorrichtung 9 und eine zugehörige Referenz-Ultraschalltemperaturmessvorrichtung 10 benachbart zueinander in der Kalibriervorrichtung 1 angeordnet sind, so dass dort von den Referenz-Messvorrichtungen 9, 10 praktisch an einem Ort die Zustandsgrößen Mediumtemperatur T_{ref} und Ultraschallgeschwindigkeit v_{ref} messtechnisch erfasst werden können; in diesem Sinne ist "benachbart zueinander" zu verstehen. Die Referenz-Temperaturmessvorrichtung 9 und die zugehörige Referenz-Ultraschalltemperaturmessvorrichtung 10 sind darüber hinaus so in der Kalibriervorrichtung 1 angeordnet, dass die Strömung in der Prüflingsmessstrecke 2 im Bereich der Ultraschalltemperaturmessvorrichtung 8 - die zusätzlich zur Referenz-Ultraschalltemperaturmessvorrichtung 10 realisiert ist - und im Bereich des Durchflussmessgeräteprüflings 3 im Wesentlichen unbeeinflusst von der invasiven Referenz-Temperaturmessvorrichtung 9 ist, so dass mit der Referenz-Ultraschalltemperaturmessvorrichtung 10 die Ultraschallgeschwindigkeit v_{ref} im Medium bei der durch die invasive Referenz-Temperaturmessvorrichtung 9 ermittelten Mediumtemperatur T_{ref} bestimmt wird. Durch diese Maßnahme lassen sich die Vorzüge der hochgenauen invasiven Referenz-Temperaturmessvorrichtung 9, die entfernt von dem Durchflussmessgeräteprüfling 3 und der Ultraschalltemperaturmessvorrichtung 8 angeordnet ist, kombinieren mit der über den Querschnitt mittelnden und schnellen Ultraschalltemperaturmessvorrichtung 8 in der Nähe des zu kalibrierenden Durchflussmessgeräteprüflings, da über die benachbart zur invasiven Referenz-Temperaturmessvorrichtung 9 vorgesehenen Referenz-Ultraschalltemperaturmessvorrichtung 10 die Herstellung des Zusammenhangs zwischen Mediumtemperatur und Ultraschallgeschwindigkeit in dem Medium herstellbar ist.

In der Fig. 3a sind die invasive Referenz-Temperaturmessvorrichtung 9 und die zugehörige Referenz-Ultraschalltemperaturmessvorrichtung 10 stromaufwärts von der Ultraschalltemperaturmessvorrichtung 8 und dem zu kalibrierenden Durchflussmessgeräteprüfling 3 angeordnet, jedoch so weit entfernt, dass die durch die invasive Referenz-Temperaturmessvorrichtung 9 induzierten Störungen 6 im Strömungsbild praktisch abgeklungen sind im Bereich des zu kalibrierenden Durchflussmessgeräteprüflings 3 und der Ultraschalltemperaturmessvorrichtung 8. Im Gegensatz dazu ist bei der Kalibriervorrichtung 1 gemäß Fig. 3b die invasive Referenz-Temperaturmessvorrichtung 9 und die zugehörige Referenz-Ultraschalltemperaturmessvorrichtung 10 stromabwärts von dem Durchflussmessgeräteprüfling 3 angeordnet, so dass die induzierte Störung 6 zunächst nicht ohne Weiteres in den Bereich des Durchflussmessgeräteprüflings 3 und der Ultraschalltemperaturmessvorrichtung 8 gelangen kann. Die Kalibriervorrichtungen 1 gemäß den Fig. 3a, 3b sind so ausgestaltet, dass der aus der Referenzmessung gewonnene Zusammenhang v_{ref} = f(T_{ref}) zwischen der Ultraschallgeschwindigkeit v_{ref} im Medium und der Mediumtemperatur T_{ref} Basis für die Temperaturmessung mit der Ultraschalltemperaturmessvorrichtung 8 in der Prüflingsmessstrecke 2 ist, d.h. dieser Zusammenhang wird bei der Auswertung der durch die Ultraschalltemperaturmessvorrichtung 8 gewonnenen Signallaufzeiten berücksichtigt, was in den Fig. 3a, 3b durch die geschwungenen Pfeile angedeutet ist. In der Praxis weist die Kalibriervorrichtung 1 eine hier nicht dargestellte Auswertevorrichtung auf, in der die Messdaten der Ultraschalltemperaturmessvorrichtung 8 der invasiven Referenz-Temperaturmessvorrichtung 9 und der zugehörigen Referenz-Ultraschalltemperaturmessvorrichtung 10 zentral erfasst und wie zuvor beschrieben weiter verarbeitet werden. In den Ausführungsbeispielen gemäß den Fig. 3a, 3b ist die beeinflussungsfreie Anordnung der invasiven Referenz-Temperaturmessvorrichtung 9 und der zugehörigen Referenz-Ultraschalltemperaturmessvorrichtung 10 dadurch realisiert, dass beide Referenz-Messvorrichtungen 9, 10 in der Prüflingsmessstrecke 2 angeordnet sind, und zwar mit genügendem Abstand von dem Durchflussmessgeräteprüfling 3 und der Ultraschalltemperaturmessvorrichtung 8 in der Prüflingsmessstrecke 2 angeordnet sind, so dass Referenzmessung und Kalibriermessung zeitgleich durchgeführt werden können. Soll zunächst eine Referenzmessung mit der invasiven Referenz-Temperaturmessvorrichtung 9 und der zugehörigen Referenz-Ultraschalltemperaturmessvorrichtung 10 zur Ermittlung des Zusammenhangs v_{ref} = f(T_{ref}) durchgeführt werden, so ist dies unter Inanspruchnahme der gesamten Kalibriervorrichtung 1 durchzuführen.

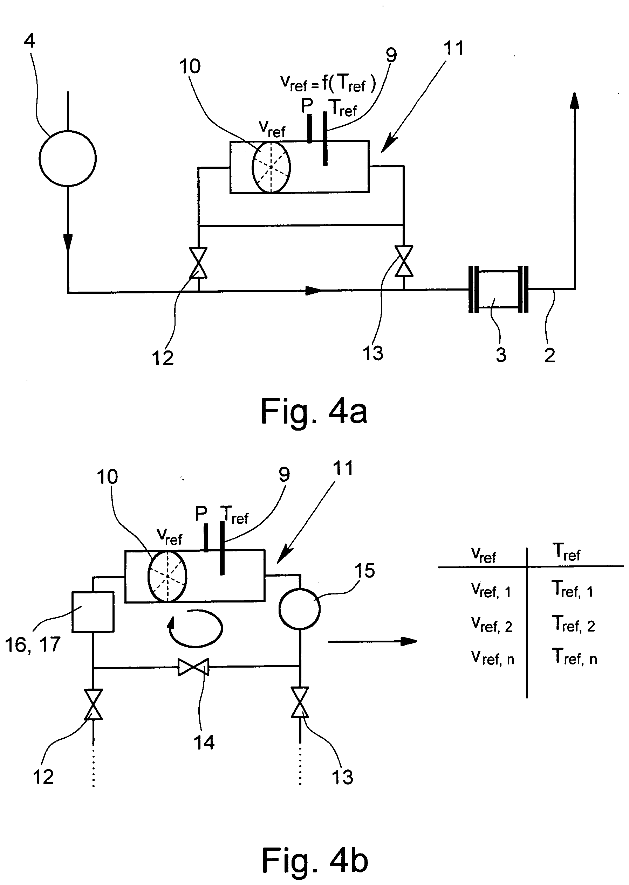

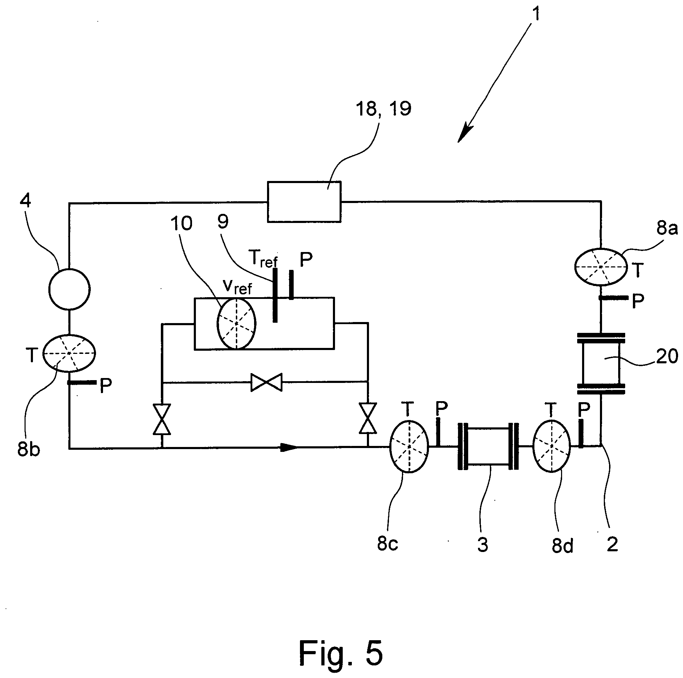

In den Fig. 4 und 5 ist der Großteil der Strömungsrohre der Kalibriervorrichtung 1 nur noch als Linie dargestellt. Bei den Kalibriervorrichtungen 1 gemäß den Fig. 4 und 5 ist vorgesehen, dass ein Bypass 11 zur Prüflingsmessstrecke 2 realisiert ist, wobei in dem Bypass 11 die invasive Referenz-Temperaturmessvorrichtung 9 und die zugehörige Referenz-Ultraschalltemperaturmessvorrichtung 10 angeordnet sind; lediglich dieser Teil des Leitungssystems ist noch zweidimensional dargestellt. Ferner ist in diesen Kalibriervorrichtungen 1 vorgesehen, dass der Bypass 11 mittels Absperrorganen 12, 13, 14 von der Prüflingsmessstrecke 2 strömungstechnisch entkoppelbar ist. Der Betrieb der invasiven Referenz-Temperaturmessvorrichtung 9 in dem Bypass 11 ermöglicht eine sehr einfache, effektive und weitreichende Isolierung der Referenzmessung von der Messung in der Prüflingsmessstrecke 2, wobei dies insbesondere dann der Fall ist, wenn die Absperrorgane 12, 13 jegliche strömungstechnische Wechselwirkung zwischen dem Bypass 11 und der Prüflingsmessstrecke 2 unterbinden.

Von ganz besonderem Vorteil ist die in Fig. 4b dargestellte Ausgestaltung des Bypass 11, bei der der Bypass 11 einen Bypasskreislauf bildet, in dem eine Fördervorrichtung 15 in Form einer Pumpe und eine kombinierte Heiz- und Kühlvorrichtung 16, 17 für das Medium vorgesehen ist. Durch einen so ausgestalteten Bypasskreislauf ist es möglich, das Medium stets so zu durchmischen und zu homogenisieren, dass praktisch ein stationärer Mediumzustand im Bypass 11 eingestellt werden kann, so dass die invasive Referenz-Temperaturmessvorrichtung 9 - die zwar hochgenau aber träge ist - einen stationären Temperaturmesswert anzeigt, so dass mit hoher Genauigkeit Zusammenhänge zwischen der Mediumtemperatur T_{ref} und der Ultraschallausbreitungsgeschwindigkeit v_{ref} im Medium erfassbar sind. Diese Zusammenhänge können für verschiedene Temperaturen und in Abhängigkeit von anderen Parametern, wie zum Beispiel dem Mediumdruck P erfasst werden, so dass mit dem Bypasskreislauf praktisch entkoppelt von der Prüflingsmessstrecke 2 Kennlinienfelder für die schnelle Ultraschalltemperaturmessvorrichtung 8 aufgenommen werden können, angedeutet durch die Wertetabelle v_{ref,i} T_{ref,i}. Der dargestellte Bypass 11 wird in regelmäßigen Abständen mit dem Medium in der Prüflingsmessstrecke 2 beschickt, so dass stets gewährleistet ist, dass das in der Prüflingsmessstrecke 2 zur Kalibrierung verwendete Medium auch das Medium ist, das den Referenzmessungen im Bypass 11 zugrunde liegt.

Die Kalibriervorrichtung 1 gemäß Fig. 5 zeigt eine als Prüflingsmessstreckenkreislauf ausgebildete Prüflingsmessstrecke 2, die zusätzlich eine kombinierte Heiz- und Kühlvorrichtung 18, 19 für das Medium aufweist, und darüber hinaus auch ein Durchflussmessgerät 20 als Gebrauchsnormal. So kann die Kalibriervorrichtung 1 praktisch bei beliebigen Durchflüssen und Zuständen des Mediums betrieben werden, wodurch eine umfassende Kalibrierung des Durchflussmessgeräteprüflings 3 möglich ist. Wie anhand von Fig. 5 zu erkennen ist, sind mehrere Ultraschalltemperaturmessvorrichtungen 8a, 8b, 8c und 8d in Durchflussrichtung beabstandet voneinander in der Prüflingsmessstrecke 2 angeordnet, so dass auch ein Temperaturverlauf innerhalb der Prüflingsmessstrecke 2 erfassbar ist, was insbesondere dann von Interesse ist, wenn beispielsweise die sich verändernde Geometrie der Kalibriervorrichtung 1 - insbesondere verursacht durch Temperatureinflüsse - kompensiert werden soll.

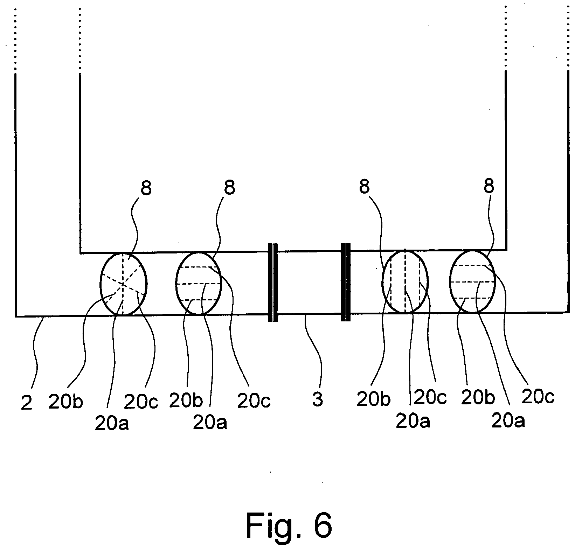

In Fig. 6 ist ganz schematisch dargestellt, dass die Ultraschalltemperaturmessvorrichtung 8 in der Prüflingsmessstrecke 2 mehrere Ultraschallmesspfade 20a, 20b, 20c durch einen Querschnitt der Prüflingsmessstrecke 2 aufweist, wobei die Ultraschallmesspfade 20a, 20b, 20c radial oder parallel durch den Querschnitt der Prüflingsmessstrecke 2 verlaufen. Dadurch ist es im Fall der radialen Ultraschallmesspfade 20a, 20b, 20c möglich, immer den gesamten Strömungsquerschnitt mittelnd zu durchmessen, wobei gleichzeitig Schichtungseffekte innerhalb der Strömung, insbesondere durch Gravitation erzeugte Schichtungseffekte, praktisch berücksichtigt werden können. Die Ausrichtung paralleler Messpfade 20a, 20b, 20c gestattet es wiederum, gezielt Randströmungseffekte zu erkennen und bei der weiteren Messung zu berücksichtigen.

## Patentansprüche

1. Kalibriervorrichtung (1) für Durchflussmessgeräte mit wenigstens einer Prüflingsmessstrecke (2), in die der zu kalibrierende Durchflussmessgerätprüfling (3) einsetzbar ist, mit wenigstens einer Vorrichtung (4) zur Erzeugung eines Durchflusses eines Mediums durch die Prüflingsmessstrecke (2), und mit wenigstens einer Temperaturmessvorrichtung (5) in der Prüflingsmessstrecke (2) zur Erfassung der Mediumtemperatur,
**dadurch gekennzeichnet,**
**dass** die Temperaturmessvorrichtung (5) als Ultraschalltemperaturmessvorrichtung (8) ausgestaltet ist, die Mediumtemperatur folglich durch die Geschwindigkeit eines emittierten Ultraschallsignals im Medium bestimmt wird, wobei die Ultraschalltemperaturmessvorrichtung (8) nicht in den Strömungsquerschnitt der Prüflingsmessstrecke (2) hineinreicht, so dass die Strömung in der Prüflingsmessstrecke (2) im Wesentlichen unbeeinflusst durch die Ultraschalltemperaturmessvorrichtung ist, insbesondere im Bereich des Durchflussmessgeräteprüflings,
**dass** eine invasive Referenz-Temperaturmessvorrichtung (9) und eine zugehörige Referenz-Ultraschalltemperaturmessvorrichtung (10) benachbart zueinander in der Kalibriervorrichtung angeordnet sind und so in der Kalibriervorrichtung angeordnet sind, dass die Strömung in der Prüflingsmessstrecke (2) im Bereich der Ultraschalltemperaturmessvorrichtung (8) und im Bereich des Durchflussmessgeräteprüflings (3) im Wesentlichen unbeeinflusst von der invasiven Referenz-Temperaturmessvorrichtung (9) ist, so dass mit der Referenz-Ultraschalltemperaturmessvorrichtung (10) die Ultraschallgeschwindigkeit (v_{ref}) im Medium bei der durch die invasive Referenz-Temperaturmessvorrichtung (9) ermittelten Mediumtemperatur (T_{ref}) bestimmbar ist,
und
**dass** der aus der Referenzmessung gewonnene Zusammenhang (v_{ref} = f(T_{ref})) zwischen der Ultraschallgeschwindigkeit v_{ref} im Medium und der Mediumtemperatur Basis für die Temperaturmessung mit der Ultraschalltemperaturmessvorrichtung (8) in der Prüflingsmessstrecke (2) ist.

2. Kalibriervorrichtung (1) nach Anspruch 1, **dadurch gekennzeichnet, dass** die invasive Referenz-Temperaturmessvorrichtung (9) und die zugehörige Referenz-Ultraschalltemperatermessvorrichtung (10) in der Prüflingsmessstrecke (2) angeordnet sind.

3. Kalibriervorrichtung nach Anspruch 1, **dadurch gekennzeichnet, dass** ein Bypass (11) zur Prüflingsmessstrecke (2) realisiert ist, und in dem Bypass (11) die invasive Referenz-Temperaturmessvorrichtung (9) und die zugehörige Referenz-Ultraschalltemperaturmessvorrichtung (10) angeordnet sind.

4. Kalibriervorrichtung nach Anspruch 3, **dadurch gekennzeichnet, dass** der Bypass (11) mittels Absperrorganen (12, 13, 14) von der Prüflingsmessstrecke (2) strömungstechnisch entkoppelbar ist.

5. Kalibriervorrichtung nach Anspruch 3 oder 4, **dadurch gekennzeichnet, dass** der Bypass (11) einen Bypasskreislauf bildet, insbesondere wobei im Bypasskreislauf eine Fördervorrichtung (15) und/oder eine Heizvorrichtung (16) und/oder eine Kühlvorrichtung (17) für das Medium vorgesehen ist.

6. Kalibriervorrichtung nach einem der Ansprüche 1 bis 5, **dadurch gekennzeichnet, dass** die Prüflingsmessstrecke (2) als Prüflingsmessstreckenkreislauf ausgebildet ist, insbesondere wobei im Prüflingsmessstreckenkreislauf eine Fördervorrichtung (4) und/oder eine Heizvorrichtung (18) und/oder eine Kühlvorrichtung (19) für das Medium vorgesehen ist.

7. Kalibriervorrichtung nach einem der Ansprüche 1 bis 6, **dadurch gekennzeichnet, dass** die Ultraschalltemperaturmessvorrichtung (8) in der Prüflingsmesstrecke (2) und/oder die Referenz-Ultraschalltemperaturmessvorrichtung mehrere Ultraschallmesspfade (20a, 20b, 20c) durch einen Querschnitt der Prüflingsmessstrecke (2) bzw. durch einen Querschnitt des Bypass (11) aufweist, wobei die Ultraschallmesspfade (20a, 20b, 20c) insbesondere radial oder parallel durch den Querschnitt der Prüflingsmessstrecke (2) bzw. des Bypass (11) verlaufen.

8. Kalibriervorrichtung nach einem der Ansprüche 1 bis 7, **dadurch gekennzeichnet, dass** mehrere Ultraschalltemperaturmessvorrichtungen (8a, 8b, 8c und 8d) in Durchflussrichtung beabstandet voneinander in der Prüflingsmessstrecke (2) angeordnet sind, insbesondere stromaufwärts von dem Montageort des zu kalibrierende Durchflussmessgerätprüflings (3) angeordnet sind.

9. Verfahren zur Kalibrierung eines Durchflussmessgeräts mit einer Kalibriervorrichtung nach einem der Ansprüche 1 bis 6, wobei die Kalibriervorrichtung (1) wenigstens eine Prüflingsmessstrecke (2), in die der zu kalibrierende Durchflussmessgerätprüfling (3) einsetzbar ist, wenigstens eine Vorrichtung (4) zur Erzeugung eines Durchflusses eines Mediums durch die Prüflingsmessstrecke (2) und wenigstens eine Temperaturmessvorrichtung (5) in der Prüflingsmessstrecke (2) zur Erfassung der Mediumtemperatur aufweist, wobei die Temperaturmessvorrichtung (5) als Ultraschalltemperaturmessvorrichtung (8) ausgestaltet ist und wobei eine invasive Referenz-Temperaturmessvorrichtung (9) und eine zugehörige Referenz-Ultraschalltemperaturmessvorrichtung (10) benachbart zueinander in der Kalibriervorrichtung (1) angeordnet sind und so in der Kalibriervorrichtung (1) angeordnet sind, dass die Strömung in der Prüflingsmessstrecke (2) im Bereich der Ultraschalltemperaturmessvorrichtung (8) und im Bereich des Durchflussmessgeräteprüflings (3) im Wesentlichen unbeeinflusst von der invasiven Referenz-Temperaturmessvorrichtung (9) ist, so dass mit der Referenz-Ultraschalltemperaturmessvorrichtung (10) die Ultraschallgeschwindigkeit (v_{ref}) im Medium bei der durch die invasive Referenztemperaturmessvorrichtung (9) ermittelten Mediumtemperatur (T_{ref}) bestimmbar ist,
**dadurch gekennzeichnet,**
**dass** in der Kalibriervorrichtung (1) eine Messung der Ultraschallgeschwindigkeit (v_{ref}) mittels der Referenz-Ultraschalltemperaturmessvorrichtung (10) und eine Messung der Mediumtemperatur (T_{ref}) mittels der invasiven Referenz-Temperaturmessvorrichtung (9) durchgeführt wird, und der aus diesen Messungen gewonnene Zusammenhang (v_{ref} = f(T_{ref})) zwischen der Ultraschallgeschwindigkeit v_{ref} im Medium und der Mediumtemperatur T_{ref} als Basis für die Temperaturmessung mit der Ultraschalltemperaturmessvorrichtung (8) in der Prüflingsmessstrecke (2) verwendet wird,

10. Verfahren nach Anspruch 9 in Zusammenhang mit einer Kalibriervorrichtung (1) nach Anspruch 4, bei der ein Bypass (11) zur Prüflingsmessstrecke (2) realisiert ist, und in dem Bypass (11) die invasive Referenz-Temperaturmessvorrichtung (9) und die zugehörige Referenz-Ultraschalltemperaturmessvorrichtung (10) angeordnet sind und ferner der Bypass (11) mittels Absperrorganen (12, 13, 14) von der Prüflingsmessstrecke (2) strömungstechnisch entkoppelbar ist, **dadurch gekennzeichnet, dass** im Bypass (11) der Zusammenhang (v_{ref} = f(T_{ref})) zwischen der Ultraschallgeschwindigkeit v_{ref} im Medium und der Mediumtemperatur T_{ref} gewonnen wird, nachdem der Bypass (11) mit dem in der Prüflingsmessstrecke (2) vorhandenen Medium geflutet worden ist und dann der Bypass (11) mittels Absperrorganen (12, 13, 14) von der Prüflingsmessstrecke (2) strömungstechnisch abgekoppelt worden ist.

11. Verfahren nach Anspruch 10, **dadurch gekennzeichnet, dass** im Bypass (11) zunächst ein stationärer Zustand des Mediums abgewartet wird, insbesondere ein stationärer Zustand hinsichtlich der mit der Referenz-Temperaturmessvorrichtung (9) ermittelten Mediumtemperatur, bevor der Zusammenhang (v_{ref} = f(T_{ref})) zwischen der Ultraschallgeschwindigkeit v_{ref} im Medium und der Mediumtemperatur T_{ref} festgelegt und zur Verwendung für die Ultraschalltemperaturmessvorrichtung (8) in der Prüflingsmessstrecke (2) freigegeben wird.

12. Verfahren nach Anspruch 10 oder 11, **dadurch gekennzeichnet, dass** im Bypass (11) nacheinander eine Mehrzahl von Temperaturen eingestellt wird, insbesondere unter Verwendung einer im Bypass (11) oder Bypasskreislauf vorgesehenen Fördervorrichtung und/oder einer Heizvorrichtung und/oder einer Kühlvorrichtung für das Medium, und eine Mehrzahl von Zusammenhängen (v_{ref} = f(T_{ref})) zwischen der Ultraschallgeschwindigkeit V_{ref} im Medium und der Mediumtemperatur T_{ref} gewonnen wird, insbesondere wobei auch der Mediumdruck gemessen und für jeden erfassten Zusammenhang vermerkt wird.

## Claims

1. Calibration device (1) for mass flowmeters having at least one test piece measuring section (2), into which the mass flowmeter test piece (3) to be calibrated can be inserted, having at least one device (4) for creating a flow of a medium through the test piece measuring section (2) and having at least one temperature-measuring device (5) in the test piece measuring section (2) for detecting the temperature of the medium,
**characterized in**
**that** the temperature-measuring device (5) is designed as an ultrasonic temperature-measuring device (8), as a result, the temperature of the medium is determined using the speed of an emitted ultrasonic signal in the medium, wherein the ultrasonic temperature-measuring device (8) does not extend into the flow cross-section of the test piece measuring section (2), so that the flow in the test piece measuring section (2) is essentially unaffected by the ultrasonic temperature-measuring device (8), in particular in the area of the mass flowmeter test piece (3),
**that** an invasive reference temperature-measuring device (9) and an associated reference ultrasonic temperature-measuring device (10) are arranged adjacent to one another in the calibration device (1) and are arranged in the calibration device (1) so that the flow in the test piece measuring section (2) in the area of the ultrasonic temperature-measuring device (8) and in the area of the mass flowmeter test piece (3) is essentially unaffected by the invasive reference temperature-measuring device (9), so that the ultrasonic speed (v_{ref}) in the medium can be determined with the reference ultrasonic temperature-measuring device (10) at the medium temperature (T_{ref}) determined using the invasive reference temperature-measuring device (9), and
**that** the relation (v_{ref}=f(T_{ref})) obtained from the reference measurement between the ultrasonic speed (v_{ref}) in the medium and the medium temperature is the basis for the temperature measurement with the ultrasonic temperature-measuring device (8) in the test piece measuring section (2).

2. Calibration device according to claim 1, **characterized in that** the invasive reference temperature-measuring device (9) and the associated reference ultrasonic temperature-measuring device (10) are arranged in the test piece measuring section (2).

3. Calibration device according to claim 1, **characterized in that** a bypass (11) to the test piece measuring section (2) is implemented and the invasive reference temperature-measuring device (9) and the associated reference ultrasonic temperature-measuring device (10) are arranged in the by-pass (11).

4. Calibration device according to claim 3, **characterized in that** the bypass (11) can be decoupled from the test piece measuring section (2) by means of stop valves (12, 13, 14).

5. Calibration device according to claim 3 or 4, **characterized in that** the by-pass (11) forms a by-pass loop, in particular wherein a conveying device (15) and/or a heating device (16) and/or a cooling device (17) for the medium are provided in the by-pass loop.

6. Calibration device according to any one of claims 1 to 5, **characterized in that** the test piece measuring section (2) is formed as a test piece measuring loop, in particular wherein a conveying device (4) and/or a heating device (18) and/or a cooling device (19) for the medium is provided in the test piece measuring loop.

7. Calibration device according to any one of claims 1 to 6, **characterized in that** the ultrasonic temperature-measuring device (8) in the test piece measuring section (2) and/or the reference ultrasonic temperature-measuring device has multiple ultrasonic measurement paths (20a, 20b, 20c) through a cross-section of the test piece measuring section (2) or through a cross-section of the by-pass (11) wherein the ultrasonic measurement paths (20a, 20b, 20c) run in particular radial or parallel through the cross-section of the test piece measuring section (2) or the by-pass (11).

8. Calibration device according to any one of claims 1 to 7, **characterized in that** multiple ultrasonic temperature-measuring devices (8a, 8b, 8c and 8d) are arranged in the flow direction spaced from one another in the test piece measuring section (2), in particular are arranged upstream from the site of the mass flowmeter test piece (3) to be calibrated.

9. Method for calibrating a flowmeter with a calibration device according to any one of claims 1 to 6, wherein the calibration device (1) has at least one test piece measuring section (2), into which the mass flowmeter test piece (3) to be calibrated can be inserted, has at least one device (4) for creating a flow of a medium through the test piece measuring section (2) and has at least one temperature-measuring device (5) in the test piece measuring section (2) for detecting the temperature of the medium, wherein the temperature-measuring device (5) is designed as an ultrasonic temperature-measuring device (8) and wherein an invasive reference temperature-measuring device (9) and an associated reference ultrasonic temperature-measuring device (10) are arranged adjacent to one another in the calibration device (1) and are arranged in the calibration device (1) so that the flow in the test piece measuring section (2) in the area of the ultrasonic temperature-measuring device (8) and in the area of the mass flowmeter test piece (3) is essentially unaffected by the invasive reference temperature-measuring device (9), so that the ultrasonic speed (v_{ref}) in the medium can be determined with the reference ultrasonic temperature-measuring device (10) at the medium temperature (T_{ref}) determined using the invasive reference temperature-measuring device (9),
**characterized in**
**that**, in the calibration device (1), a measurement of the ultrasonic speed (v_{ref}) is carried out by means of the reference ultrasonic temperature-measuring device (10) and a measurement of the medium temperature (T_{ref}) is carried out by means of the invasive reference temperature-measuring device (9), and the relation (v_{ref}=f(T_{ref})) obtained from the reference measurement between the ultrasonic speed (v_{ref}) in the medium and the medium temperature is the basis for the temperature measurement with the ultrasonic temperature-measuring device (8) in the test piece measuring section (2).

10. Method according to claim 9 in conjunction with a calibration device (1) according to claim 4, in which a by-pass (11) to the test piece measuring section (2) is implemented and the invasive reference temperature-measuring device (9) and the associated reference ultrasonic temperature-measuring device (10) are arranged in the by-pass (11) and, further, the by-pass (11) can be decoupled from the test piece measuring section (2) by means of stop valves (12, 13, 14), **characterized in that** the relation (v_{ref}=f(T_{ref})) between the ultrasonic speed (v_{ref}) in the medium and the medium temperature (T_{ref}) is obtained after the by-pass (11) has been flooded with the medium present in the test piece measuring section (2) and then the by-pass (11) is decoupled in terms of flow from the test piece measuring section (2) by means of stop valves (12, 13, 14)

11. Method according to claim 10, **characterized in that**, first, a stationary state of the medium, in particular a stationary state in view of the medium temperature determined with the reference temperature-measuring device (9) passes before the relation (v_{ref}=f(T_{ref})) between the ultrasonic speed (v_{ref}) in the medium and the medium temperature (T_{ref}) is set and released for usage by the ultrasonic temperature-measuring device (8) in the test piece measuring section (2).

12. Method according to claim 10 or 11, **characterized in that** several temperatures are set in the by-pass (11), in particular using a conveying device and/or a heating device and/or a cooling device for the medium provided in the by-pass (11) or the by-pass loop, and several relations (v_{ref}=f(T_{ref})) between the ultrasonic speed (v_{ref}) in the medium and the medium temperature (T_{ref}) are obtained, in particular wherein the medium pressure is also measured and noted for every obtained relation.

## Revendications

1. Dispositif de calibrage (1) pour débitmètres avec au moins une section de mesurage de l'échantillon de test (2), dans laquelle l'échantillon de test du débitmètre (3) devant être soumis à un calibrage peut être mis en place, avec au moins un dispositif (4), lequel est destiné à la production d'une circulation d'un milieu à travers la section de mesurage de l'échantillon de test (2), et avec au moins un dispositif de mesure de la température (5), lequel se trouve dans la section de mesurage de l'échantillon de test (2) en vue de la détermination de la température du milieu,
**caractérisé en ce que**
le dispositif de mesure de la température (5) est configuré sous la forme d'un dispositif de mesure de la température par ultrasons (8), la température du milieu est déterminée consécutivement par la vitesse d'un signal ultrasonore émis dans le milieu,
dans lequel le dispositif de mesure de la température par ultrasons (8) ne pénètre pas dans la section transversale du courant de la section de mesurage de l'échantillon de test (2), de telle sorte que le courant qui se trouve dans la section de mesurage de l'échantillon de test (2) demeure, pour l'essentiel, non influencé par le dispositif de mesure de la température par ultrasons, en particulier dans la zone de l'échantillon de test du débitmètre ;
**caractérisé en ce que**
un dispositif invasif de référence de mesure de la température (9) et un dispositif connexe de référence de mesure de la température par ultrasons (10) sont disposés dans le dispositif de calibrage, de manière adjacente l'un par rapport à l'autre, et sont disposés de telle sorte dans le dispositif de calibrage que le courant qui se trouve dans la section de mesurage de l'échantillon de test (2), au niveau de la zone du dispositif de mesure de la température par ultrasons (8) et au niveau de la zone de l'échantillon de test du débitmètre (3) demeure, pour l'essentiel, non influencé par le dispositif invasif de référence de mesure de la température (9), et de telle sorte que la vitesse des ultrasons (V_{ref}) dans le milieu peut être déterminée au moyen du dispositif de référence de mesure de la température par ultrasons (10) pour la température du milieu (T_{ref}) calculée par l'intermédiaire du dispositif invasif de référence de mesure de la température (9) ; et
**caractérisé en ce que**
la relation (V_{ref} = f(T_{ref})), laquelle a été obtenue à partir de la mesure de référence, entre la vitesse des ultrasons (V_{ref}) dans le milieu et la température du milieu forme la base pour la mesure de la température avec le dispositif de mesure de la température par ultrasons (8) dans la section de mesurage de l'échantillon de test (2).

2. Dispositif de calibrage (1) selon la revendication 1, **caractérisé en ce que** le dispositif invasif de référence de mesure de la température (9) et le dispositif de référence de mesure de la température par ultrasons (10) sont disposés dans la section de mesurage de l'échantillon de test (2).

3. Dispositif de calibrage selon la revendication 1, **caractérisé en ce qu'**une dérivation (11) est réalisée vers la section de mesurage de l'échantillon de test (2) et **caractérisé en ce que** le dispositif invasif de référence de mesure de la température (9) et le dispositif connexe de référence de mesure de la température par ultrasons (10) sont disposés dans la dérivation (11).

4. Dispositif de calibrage selon la revendication 3, **caractérisé en ce que** la dérivation (11) peut être désaccouplée de la section de mesurage de l'échantillon de test (2), sur le plan de la technique des fluides, au moyen d'organes de fermeture (12, 13, 14).

5. Dispositif de calibrage selon la revendication 3 ou 4, **caractérisé en ce que** la dérivation (11) forme un circuit de dérivation, en particulier dans lequel un dispositif de convoyage (15) et/ou un dispositif de chauffage (16) et/ou un dispositif de refroidissement (17) destinés au milieu sont prévus dans le circuit de dérivation.

6. Dispositif de calibrage selon l'une des revendications 1 à 5, **caractérisé en ce que** la section de mesurage de l'échantillon de test (2) est conçue sous la forme d'un circuit de la section de mesurage de l'échantillon de test, en particulier dans lequel un dispositif de convoyage (4) et/ou un dispositif de chauffage (18) et/ou un dispositif de refroidissement (19) destinés au milieu sont prévus dans le circuit de la section de mesurage de l'échantillon de test.

7. Dispositif de calibrage selon l'une des revendications 1 à 6, **caractérisé en ce que** le dispositif de mesure de la température par ultrasons (8), dans la section de mesurage de l'échantillon de test (2), et/ou le dispositif de référence de mesure de la température par ultrasons présentent plusieurs voies de mesure des ultrasons (20a, 20b, 20c) à travers une section transversale de la section de mesurage de l'échantillon de test (2), respectivement à travers une section transversale de la dérivation (11), dans lequel les voies de mesure des ultrasons (20a, 20b, 20c) courent en particulier de manière radiale ou parallèle à travers la section transversale de la section de mesurage de l'échantillon de test (2), respectivement de la dérivation (11).

8. Dispositif de calibrage selon l'une des revendications 1 à 7, **caractérisé en ce que** plusieurs dispositifs de mesure de la température par ultrasons (8a, 8b, 8c et 8d) sont disposés dans la section de mesurage de l'échantillon de test (2), en étant positionnés dans le sens de la circulation, à distance les uns par rapport aux autres, et en particulier sont disposés en amont du lieu de montage de l'échantillon de test du débitmètre (3) devant être soumis à un calibrage.

9. Procédé destiné au calibrage d'un débitmètre avec un dispositif de calibrage selon l'une des revendications 1 à 6, dans lequel le dispositif de calibrage (1) présente au moins une section de mesurage de l'échantillon de test (2), dans laquelle l'échantillon de test du débitmètre (3) devant être soumis à un calibrage peut être mis en place, présente au moins un dispositif (4), lequel est destiné à la production d'une circulation d'un milieu à travers la section de mesurage de l'échantillon de test (2), et présente au moins un dispositif de mesure de la température (5), lequel se trouve dans la section de mesurage de l'échantillon de test (2) en vue de la détermination de la température du milieu ;
dans lequel le dispositif de mesure de la température (5) est configuré sous la forme d'un dispositif de mesure de la température par ultrasons (8) ; et
dans lequel un dispositif invasif de référence de mesure de la température (9) et un dispositif connexe de référence de mesure de la température par ultrasons (10) sont disposés dans le dispositif de calibrage (1) de manière adjacente l'un par rapport à l'autre et sont disposés de telle sorte dans le dispositif de calibrage (1) que le courant qui se trouve dans la section de mesurage de l'échantillon de test (2), au niveau de la zone du dispositif de mesure de la température par ultrasons (8) et au niveau de la zone de l'échantillon de test du débitmètre (3), demeure, pour l'essentiel, non influencé par le dispositif invasif de référence de mesure de la température (9), et de telle sorte que la vitesse des ultrasons (V_{ref}) dans le milieu peut être déterminée au moyen du dispositif de référence de mesure de la température par ultrasons (10) pour la température du milieu (T_{ref}), laquelle a été calculée par l'intermédiaire du dispositif invasif de référence de mesure de la température (9),
**caractérisé en ce que**
une mesure de la vitesse des ultrasons (V_{ref}) est réalisée dans le dispositif de calibrage (1) au moyen du dispositif de référence de mesure de la température par ultrasons (10) et une mesure de la température du milieu (T_{ref}) est réalisée dans le dispositif de calibrage au moyen du dispositif invasif de référence de mesure de la température (9) ; et **caractérisé en ce que**
la relation (V_{ref} = f(T_{ref})), laquelle a été obtenue à partir de ces mesures, entre la vitesse des ultrasons (V_{ref}) dans le milieu et la température du milieu (T_{ref}) sert de base pour la mesure de la température au moyen du dispositif de mesure de la température par ultrasons (8) dans la section de mesurage de l'échantillon de test (2).

10. Procédé selon la revendication 9 en relation avec un dispositif de calibrage (1) selon la revendication 4, pour lequel une dérivation (11) est réalisée vers la section de mesurage de l'échantillon de test (2) ; et
dans lequel le dispositif invasif de référence de mesure de la température (9) et le dispositif connexe de référence de mesure de la température par ultrasons (10) sont disposés dans la dérivation (11) ; et
dans lequel la dérivation (11) peut en outre être désaccouplée de la section de mesurage de l'échantillon de test (2), sur le plan de la technique des fluides, au moyen d'organes de fermeture (12, 13, 14); **caractérisé en ce que**
dans la dérivation (11), la relation (V_{ref} = f(T_{ref})) entre la vitesse des ultrasons (V_{ref}) dans le milieu et la température du milieu (T_{ref}) est obtenue après que la dérivation (11) ait été mise en contact par immersion avec le milieu existant dans la section de mesurage de l'échantillon de test (2) et après que la dérivation (11) ait été ensuite désaccouplée de la section de mesurage de l'échantillon de test (2), sur le plan de la technique des fluides, au moyen d'organes de fermeture (12, 13, 14).

11. Procédé selon la revendication 10, **caractérisé en ce que** dans la dérivation (11), un état stationnaire du milieu est attendu dans un premier temps, en particulier un état stationnaire au regard de la température du milieu qui a été calculée au moyen du dispositif de référence de mesure de la température (9), avant que la relation (V_{ref} = f(T_{ref})) entre la vitesse des ultrasons (V_{ref}) dans le milieu et la température du milieu (T_{ref}) soit déterminée et soit validée dans la section de mesurage de l'échantillon de test (2) en vue de l'utilisation pour le dispositif de mesure de la température par ultrasons (8).

12. Procédé selon la revendication 10 ou 11, **caractérisé en ce qu'**une pluralité de températures est ajustée, les unes à la suite des autres, dans la dérivation (11), en particulier en utilisant un dispositif de convoyage et/ou un dispositif de chauffage et/ou un dispositif de refroidissement destinés au milieu, lesquels sont prévus dans la dérivation (11) ou dans le circuit de dérivation ; et **caractérisé en ce que**
une pluralité de relations (V_{ref} = f(T_{ref})) est obtenue entre la vitesse des ultrasons (V_{ref}) dans le milieu et la température du milieu (T_{ref}) ;
en particulier dans lequel la pression du milieu est également mesurée et est indiquée pour chaque relation détectée.
